# EUROPÄISCHE PATENTANMELDUNG

(11) **EP 1 260 726 A2**
(43) Veröffentlichungstag der Anmeldung: **27.11.2002**
(21) Anmeldenummer: 02009299.5
(22) Anmeldetag: 30.04.2002
(51) Int. Cl.: F16D 13/52, F16D 13/64

(54) **Lamellen-Kupplungseinrichtung mit gekoppelten Lamellen**

(30) Priorität: 21.05.2001 DE 10124583
(71) Anmelder: ZF Sachs AG, 97424 Schweinfurt (DE)
(72) Erfinder: Kundermann, Wolfgang, Dipl.-Ing., 97422 Schweinfurt (DE)

(57) **Zusammenfassung**

Die Erfindung betrifft u.a. eine Kupplungseinrichtung für die Anordnung in einem Kraftfahrzeug-Antriebsstrang zwischen einer Antriebseinheit und einem Getriebe, umfassend wenigstens eine einer Getriebeeingangswelle zugeordnete Lamellen-Kupplungsanordnung zur Momentenübertragung zwischen der Antriebseinheit und dem Getriebe, wobei die Kupplungsanordnung einen Außenlamellenträger mit Außenlamellen und einen Innenlamellenträger mit Innenlamellen aufweist, von denen einer samt seinen Lamellen einer der Antriebseinheit zugeordneten Eingangsseite und der andere (82 bzw. 86) samt seinen Lamellen (208) einer der Getriebeeingangswelle zugeordneten Ausgangsseite der Kupplungsanordnung zugehört. Es wird vorgeschlagen, dass zumindest einige der der Eingangsseite zugehörigen Lamellen (206) unabhängig vom Lamellenträger durch eine Koppelanordnung (222) im Sinne einer Verkoppelung ihrer Drehmassen starr oder - vorzugsweise - elastisch miteinander gekoppelt sind oder/und dass zumindest einige der der Ausgangsseite zugehörigen Lamellen unabhängig vom Lamellenträger durch eine Koppelanordnung im Sinne einer Verkoppelung ihrer Drehmassen starr oder - vorzugsweise - elastisch miteinander gekoppelt sind.

## Beschreibung

Die Erfindung betrifft eine Kupplungseinrichtung für die Anordnung in einem Kraftfahrzeug-Antriebsstrang zwischen einer Antriebseinheit und einem Getriebe, umfassend wenigstens eine einer Getriebeeingangswelle zugeordnete Lamellen-Kupplungsanordnung zur Momentenübertragung zwischen der Antriebseinheit und dem Getriebe, wobei die Kupplungsanordnung einen Außenlamellenträger mit Außenlamellen und einen Innenlamellenträger mit Innenlamellen aufweist, von denen einer samt seinen Lamellen einer der Antriebseinheit zugeordneten Eingangsseite und der andere samt seinen Lamellen einer der Getriebeeingangswelle zugeordneten Ausgangsseite der Kupplungsanordnung zugehört.

Eine derartige Kupplungseinrichtung ist beispielsweise aus der US 6,026,944 bekannt. Bei dieser bekannten Kupplungseinrichtung sind den Außenlamellen und den Innenlamellen jeweils Federanordnungen zugeordnet, die zwischen benachbarten Außenlamellen bzw. benachbarten Innenlamellen paarweise wirksame Federflügel bzw. Federringe aufweisen, um beim Auskuppeln die in Reibeingriff miteinander stehenden Lamellen zuverlässig außer Reibeingriff zu bringen und dementsprechend Schleppmomente zu vermeiden. Im ausgekuppelten Zustand werden die Außenlamellen und die Innenlamellen durch die jeweilige Federanordnung so axial auseinander gedrückt, dass die betreffenden Lamellen in gleichmäßigen Axialabständen angeordnet sind. Es geht aus der Patentschrift nicht hervor, ob die Federanordnungen dabei einen nennenswerten Reibeingriff zwischen den Außenlamellen bzw. Innenlamellen untereinander und gegebenenfalls zum Außen- bzw. Innenlamellenträger vermitteln. In der Patentschrift geht es jedenfalls ausschließlich um die Verhinderung von Schleppmomenten im ausgekuppelten Zustand der Lamellenkupplung.

Bei den Lamellenkupplungen der eingangs erwähnten Art kann es, insbesondere im Falle des Antriebs durch einen Verbrennungsmotor, zu der Entwicklung von Geräuschen kommen, die durch Schlagen der Lamellen in Umfangsrichtung in der Verzahnung mit dem Lamellenträger entstehen. Derartige Geräusche können speziell im Leerlauf durch Motorungleichförmigkeiten angeregt werden, die die Lamellen dazu anregen, sich innerhalb des Verzahnungsspiels in Umfangsrichtung zu bewegen. Da die einzelnen Lamellen für sich genommen eine recht kleine Drehmasse aufweisen, können auch noch relativ hochfrequente Motorungleichförmigkeiten derartige Drehbewegungen, gegebenenfalls Drehschwingungen, der Lamellen relativ zum Lamellenträger anregen. Das Phänomen betrifft, soweit es um Geräuschentwicklungen im Leerlauf geht, vor allem die eingangsseitigen Lamellen.

Im Hinblick auf eine Beherrschung bzw. zumindest Milderung der Geräuschentwicklung bzw. des Schlagens von Lamellen in ihrer lamellenträgerseitigen Verzahnung, schlägt die Erfindung demgegenüber vor, dass zumindest einige der der Eingangsseite zugehörigen Lamellen unabhängig vom Lamellenträger durch eine Koppelanordnung im Sinne einer Verkoppelung ihrer Drehmassen starr oder - vorzugsweise - elastisch miteinander gekoppelt sind oder/und dass zumindest einige der der Ausgangsseite zugehörigen Lamellen unabhängig vom Lamellenträger durch eine Koppelanordnung im Sinne einer Verkoppelung ihrer Drehmassen starr oder - vorzugsweise-elastisch miteinander gekoppelt sind.

Bei der Kupplungseinrichtung kann es sich um eine Doppel- oder Mehrfach-Kupplungseinrichtung handeln, die wenigstens zwei einer jeweiligen Getriebeeingangswelle zugeordnete Lamellen-Kupplungsanordnungen aufweist. Für den Fall einer derartigen Kupplungseinrichtung wird nach der Erfindung vorgeschlagen, dass für wenigstens eine, vorzugsweise für jede der Kupplungsanordnungen zumindest einige der der jeweiligen Eingangsseite zugehörigen Lamellen unabhängig vom betreffenden Lamellenträger durch eine Koppelanordnung im Sinne einer Verkoppelung ihrer Drehmassen starr oder - vorzugsweise - elastisch miteinander gekoppelt sind oder/und zumindest einige der der jeweiligen Ausgangsseite zugehörigen Lamellen unabhängig vom betreffenden Lamellenträger durch eine Koppelanordnung im Sinne einer Verkoppelung ihrer Drehmassen starr oder - vorzugsweise-elastisch miteinander gekoppelt sind.

Durch die erfindungsgemäße Verkopplung der Drehmassen der betreffenden Lamellen wird erreicht, dass deren Drehmassen gewissermaßen zusammengeschaltet werden, so dass gegenüber einer Kupplungseinrichtung mit ungekoppelten Lamellen wenigstens eine Resonanzfrequenz bei einer anderen Frequenz, beispielsweise bei einer tieferen Frequenz, auftritt und damit Drehschwingungen der Lamellen relativ zum Lamellenträger nicht mehr oder nur noch abgeschwächt durch Motorungleichförmigkeiten angeregt werden können. Da das genannte Problem der Geräuschentwicklung vor allem im Leerlauf, und zwar speziell im ausgekuppelten Zustand auftritt, wird es in der Regel ausreichen, wenn nur der Eingangsseite bzw. deren Lamellen eine entsprechende Koppelanordnung zugeordnet ist, und dass für die der Ausgangsseite zugehörigen Lamellen keine derartige Koppelanordnung vorgesehen ist.

Wenn eine starre Kopplung der betreffenden Lamellen vorgesehen ist, können diese Lamellen nur gemeinsam innerhalb des Verzahnungsspiels verdreht werden, es sind also keine, von einem ggf. vorgesehenen Drehspiel abgesehen, Relativverdrehungen zwischen den Lamellen möglich. Eine derartige starre Kopplung kann beispielsweise mittels wenigstens eines mit den Lamellen, beispielsweise deren Verzahnungsabschnitten, in formschlüssigem Eingriff stehenden Koppelstifts oder dergleichen erreicht werden.

Für die Variante mit einer elastischen Verkoppelung der Lamellen wird vorgeschlagen, dass die Koppelanordnung wenigstens ein Federelement umfasst, welches die betreffenden Lamellen elastisch, ggf. innerhalb eines möglicherweise vorgesehenen Drehspiels, in Richtung auf eine vorgegebene Relativdrehstellung vorspannt. Im Falle der elastischen Verkoppelung der Lamellen können diese noch innerhalb des Verzahnungsspiels und des durch die Koppelanordnung gegebenen Freiheitsgrads Verdrehungen, gegebenenfalls Drehschwingungen, relativ zu einander durchführen. Dies kann durchaus erwünscht sein, da hierdurch ein Teil der von den Motorungleichförmigkeiten herrührenden Anregungsenergie von den verkoppelten Lamellen aufgenommen werden kann, so dass dieser Teil der Anregungsenergie keine Verdrehungen bzw. Drehschwingungen der Lamellen als Gesamtheit relativ zum Lamellenträger mehr anregen kann. Man kann auf diese Weise, insbesondere in Verbindung mit zusätzlichen oder inherenten Dämpfungsmaßnahmen, Tilgereffekte erzielen, so dass ein Schlagen der Lamellen in den Verzahnungen und dementsprechende Geräuschentwicklung stark unterdrückt bzw. sogar völlig vermieden wird.

Insbesondere bei naßlaufenden Lamellen-Kupplungen tritt im ausgekuppelten Zustand häufig ein erhöhtes, durch nicht aufgehobenen, gegebenenfalls durch Kühlöl vermittelten Reibeingriff verursachtes Schleppmoment zwischen Innen- und Außenlamellen auf. Das Schleppmoment kann insbesondere durch Kleben von Innen- und Außenlamellen aneinander bzw. durch einseitige Anlage von Innen- und Außenlamellen aneinander entstehen. Um derartige Schleppmomente zu vermeiden oder zumindest deutlich zu reduzieren, kann wenigstens eine eingangsseitigen Lamellen oder/und ausgangsseitigen Lamellen zugeordnete, wenigstens ein Federelement umfassende Federanordnung vorgesehen sein, die eine Trennung von im gegenseitigen Reibeingriff stehenden Lamellen beim Auskuppeln zumindest unterstützt. Besonders bevorzugt ist, dass diese Federanordnung die erfindungsgemäße Koppelanordnung bildet. Durch diese Multifunktionalität der die Feder- bzw. Koppelanordnung bildenden Federelemente ergeben sich verschiedene Vorteile, wie eine kleine Bauteilevielfalt, die Vermeidung eines erhöhten Montageaufwands zur Montage verschiedener, jeweils nur eine Funktion erfüllender Elemente usw.

Betreffend die Verkoppelung von bzw. Einwirkung auf Außenlamellen wird vorgeschlagen, dass die diesen zugeordnete Koppelanordnung bzw. Federanordnung eine Mehrzahl von um einen Außenumfang des von den Innenund Außenlamellen gebildeten Lamellenpakets verteilten, zwischen dem Außenumfang und einem Innenumfangsbereich des Außenlamellenträgers angeordneten Federelementen aufweist, die an den Außenlamellen im Sinne der Verkoppelung ihrer Drehmassen oder/und im Sinne eines Auseinanderdrückens in axialer Richtung angreifen

In entsprechender Weise wird betreffend die Verkoppelung von bzw. Einwirkung auf Innenlamellen vorgeschlagen, dass die diesen zugeordnete Koppelanordnung bzw. Federanordnung eine Mehrzahl von um einen Innenumfang des von den Innen- und Außenlamellen gebildeten Lamellenpakets verteilten, zwischen dem Innenumfang und einem Außenumfangsbereich des Innenlamellenträgers angeordneten Federelementen aufweist, die an den Innenlamellen im Sinne der Verkoppelung ihrer Drehmassen oder/und im Sinne eines Auseinanderdrückens in axialer Richtung angreifen.

Gemäß diesen Vorschlägen können die Federelemente ohne wesentlichen Bauraumbedarf zwischen dem Lamellenpaket und dem betreffenden Lamellenträger untergebracht werden und beispielsweise in bzw. zwischen Verzahnungsabschnitten der betreffenden Lamellen eingesetzt sein, und es ist eine einfache Montage der Federelemente möglich, beispielsweise derart, dass diese am Außen- bzw. Innenumfang des Lamellenpakets angeordnet werden und dann zusammen mit dem Lamellenpaket gemeinsam zwischen dem Außen- und dem Innenlamellenträger axial eingeschoben werden unter Herstellung des Drehmitnahmeeingriffs zwischen den lamellenseitigen und lamellenträgerseitigen Verzahnungen.

Zur Vermeidung eines Verkippens der Lamellen und eines möglicherweise hierauf zurückzuführenden Klemmens der Lamellen in der Verzahnung wird vorgeschlagen, dass wenigstens drei Federelemente in etwa gleichen Winkelabständen um den Umfang des Lamellenpakets verteilt sind.

Zur Positionierung der Federelemente in Bezug auf die Lamellen oder/und zur federelastischen Kopplung der Lamellen miteinander in Umfangsrichtung wird als besonders bevorzugt vorgeschlagen, dass die betreffenden Lamellen mit Schlitzen in ihren Verzahnungsbereichen ausgeführt sind, in die die Federelemente eingreifen. Um die Lamellen im Hinblick auf die Trennung beim Auskuppeln paarweise in zueinander entgegengesetzte Axialrichtungen elastisch vorzuspannen, können die Federelemente mit elastisch in axialer Richtung gegeneinander verstellbaren Abschnitten zwischen Verzahnungsbereichen benachbarter Lamellen eingreifen. Dabei kann vorteilhaft vorgesehen sein, dass die in axialer Richtung gegeneinander verstellbaren Abschnitte von Federschenkeln eines jeweiligen, zwischen die Verzahnungsbereiche eingreifenden U- oder V-Abschnitts des jeweiligen Federelements gebildet sind.

Es wurde oben schon angesprochen, dass es zweckmäßig sein kann, für eine Dämpfung von Drehschwingungen von Lamellen relativ zum zugeordneten Lamellenträger bzw. von Lamellen relativ zu einander zu sorgen. Hierzu kann vorgesehen sein, dass zumindest einigen der der Eingangsseite zugehörigen Lamellen oder/und zumindest einigen der der Ausgangsseite zugehörigen Lamellen eine Dämpfungsanordnung zugeordnet ist, die Drehschwingungen der Lamellen relativ zum zugeordneten Lamellenträger oder/und Drehschwingungen der Lamellen relativ zueinander durch Reibung dämpft. Bevorzugt bildet die Koppelanordnung bzw. Federanordnung selbst die Dämpfungsanordnung. Beispielsweise kann wenigstens ein Federelement der Koppelanordnung bzw. Federanordnung mit einem Dämpfungsbereich an wenigstens einer Lamelle oder/und an dem den betreffenden Lamellen zugeordneten Lamellenträger reibschlüssig anliegen. Im Falle der erwähnten Ausbildung der Federelemente mit zwischen Verzahnungsbereiche eingreifenden U- oder V-Abschnitten können deren Federschenkel als Dämpfungsbereich zur Dämpfung von Drehschwingungen der Lamellen relativ zu einander dienen.

Die Erfindung wird im vorgenannten anhand eines in den Figuren gezeigten Ausführungsbeispiels näher erläutert:
- Fig. 1: zeigt eine in einem Antriebsstrang zwischen einer Antriebseinheit und einem Getriebe angeordnete Doppelkupplung mit zwei Lamellen-Antriebsanordnungen, die nach der Erfindung ausgeführt sein können.
- Fig. 2: zeigt eine Ansicht auf eine erfindungsgemäße Doppelkupplung entsprechend Fig. 1, von radial außen, wobei der Außenlamellenträger der radial äußeren Lamellenkupplungsanordnung teilgeschnitten dargestellt ist.
- Fig. 3: zeigt in Teilfiguren a) und b) eine Koppel- oder Trennfeder, die in zugeordnete Schlitze in Lamellenverzahnungsabschnitten und zwischen Lamellenverzahnungsabschnitten benachbarter Lamellen einsetzbar ist.
- Fig. 4: zeigt ein vergrößertes Detail der Schnittansicht in Fig. 2 mit Ansicht auf eine in die Lamellenverzahnung der Außenlamellen eingelegte Koppel- und Trennfeder.
- Fig. 5: zeigt eine perspektivische Ansicht auf die Lamellenverzahnung und die Koppel- und Trennfeder mit schräg-radialer/axialer Sichtrichtung.
- Fig. 6: ist eine teilgeschnittene Ansicht in axialer Richtung auf das Lamellenpaket der Fig. 4 gemäß Schnittlinie VI-VI.
- Fig. 7: zeigt das Lamellenpaket der Fig. 6 mit der Koppel- und Trennfeder im eingesetzten Zustand zwischen dem Außenlamellenträger und dem Innenlamellenträger, mit denen die Lamellen über die Verzahnungen in Drehmitnahmeeingriff stehen.
- Fig. 8: zeigt eine Axialansicht auf das Lamellenpaket mit drei in die Verzahnung eingesetzten Koppel- und Trennfedern.

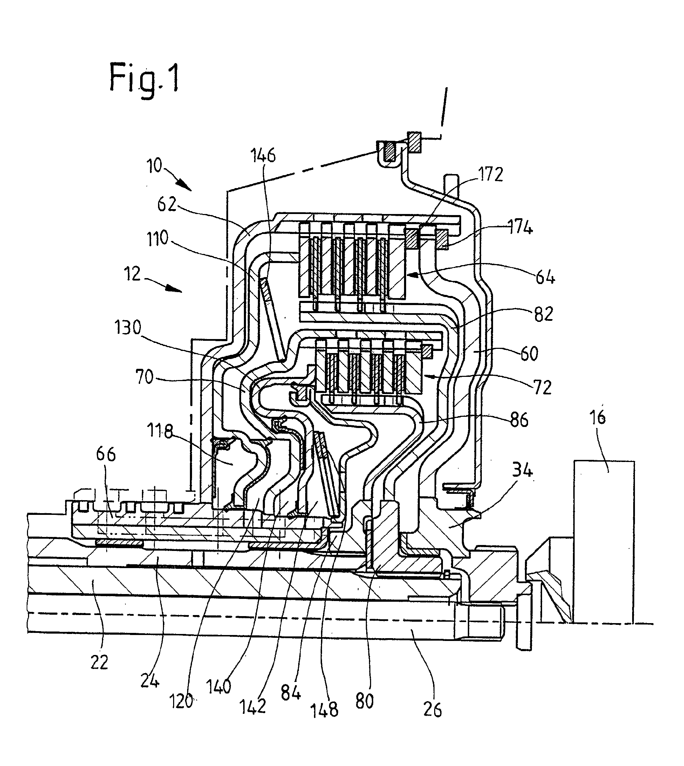

Fig. 1 zeigt eine in einem Antriebsstrang 10 zwischen einer Antriebseinheit und einem Getriebe angeordnete Doppelkupplung 12. Von der Antriebseinheit, beispielsweise eine Brennkraftmaschine, ist in Fig. 1 nur ein Koppelende 16 einer Abtriebswelle, ggf. Kurbelwelle, dargestellt. Eine Eingangsnabe 34 der Doppelkupplung 12 steht mit dem Koppelende 16 über eine nicht dargestellte Torsionsschwingungsdämpferanordnung in Drehmomentübertragungsverbindung. Von dem Getriebe sind zwei Getriebeeingangswellen 22 und 24 dargestellt, an denen über Naben 80 und 84 ein jeweiliger Innenlamellenträger 82 bzw. 86 einer radial äußeren Lamellen-Kupplungsanordnung 64 bzw. einer radial inneren Lamellen-Kupplungsanordnung 72 drehfest angeordnet ist. Über ein Koppelglied 60 sind ein Außenlamellenträger 62 der radial äußeren Lamellen-Kupplungsanordnung und - über ein Ring- oder Hülsenteil 66 - ein Außenlamellenträger 70 der radial inneren Lamellen-Kupplungsanordnung drehfestangeschlossen. DieAußenlamellenträger dienen als Eingangsseite der jeweiligen Lamellen-Kupplungsanordnung und die Innenlamellenträger dienen als Ausgangsseite der jeweiligen Lamellen-Kupplungsanordnung. Die Lamellenkupplungsanordnungen lassen sich jeweils über einen hydraulischen Nehmerzylinder 118 bzw. 140 mit einem Betätigungskolben 110 bzw. 130 im Sinne eines Einrückens betätigen. Die hydraulischen Nehmerzylinder 118 und 140 sind über Kanäle im Ringteil 66 an hydraulischen Geberzylindern oder Steuer/Regel-Ventilen oder dergl. angeschlossen. Zum Ausrücken der Lamellenkupplungsanordnungen ist den Betätigungskolben eine Tellerfederanordnung 146 bzw. 148 zugeordnet. Durch die Getriebeeingangswellen 22 und 24 erstreckt sich eine Ölpumpenantriebswelle 26, wobei die Ölpumpe Kühlöl zur Zufuhr zu den Lamellenpaketen der Kupplungsanordnungen 64 und 72 sowie in Fliehkraft-Druckausgleichskammern 120 und 142 bereitstellt. Die Kühlölzufuhr erfolgt durch Kanäle zwischen dem Ringteil 66 und der Getriebeeingangswelle 24 bzw. zwischen den Getriebeeingangswellen.

Die in Fig. 1 gezeigte Doppelkupplungskonstruktion entspricht im Wesentlichen (von gewissen, hier nicht interessierenden Änderungen abgesehen) einer Doppelkupplungskonstruktion, die in verschiedenen deutschen Patentanmeldungen der Anmelderin beschrieben ist. Es wird insbesondere auf die Offenlegungsschriften DE 100 04 179 A1, DE 100 04 186 A1, DE 100 04 189 A1, DE 100 04 190 A1 und DE 100 04 195 A1 verwiesen, deren Offenbarung in den Offenbarungsgehalt der vorliegenden Anmeldung einbezogen wird. Es wird hierzu darauf hingewiesen, dass Fig. 1 der vorliegenden Anmeldung weitgehend der Fig. 1 dieser zu einer Patentfamilie gehörenden Anmeldungsserie entspricht und dass in beiden Figuren für einander entsprechende Bauteile die gleichen Bezugszeichen verwendet sind.

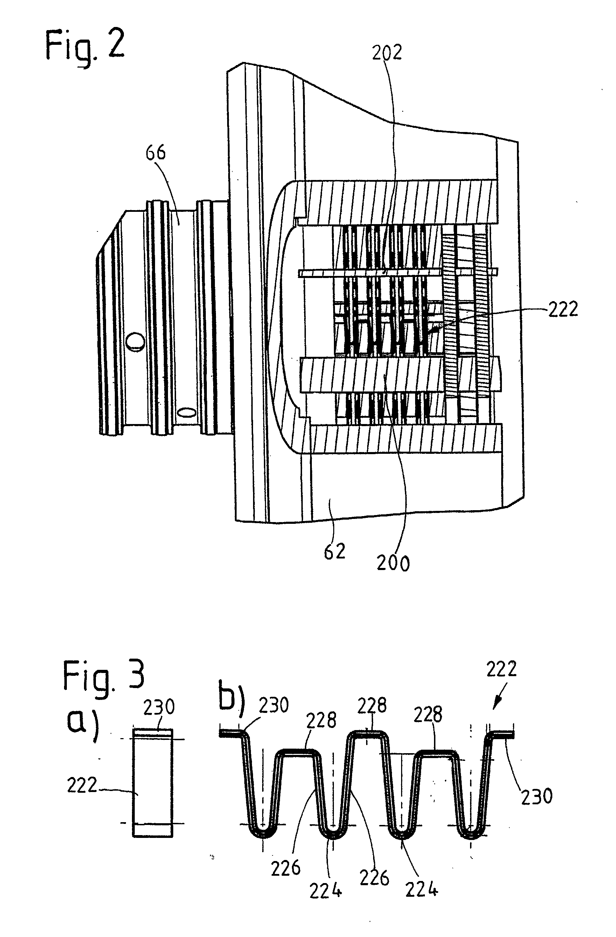

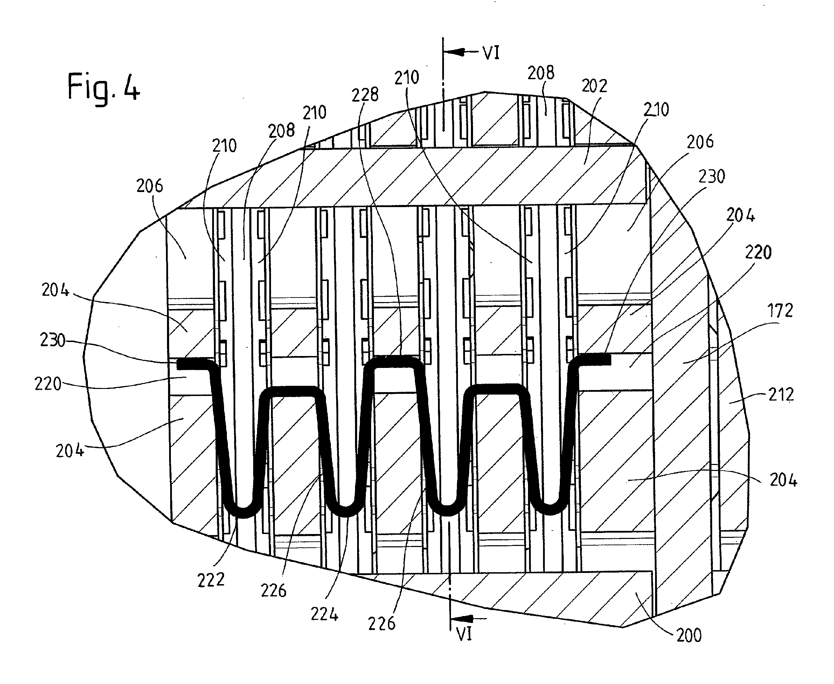

Fig. 2 zeigt eine Radialansicht von außen auf das Ringteil 66 und den teilweise geschnitten Außenlamellenträger 62. Von dem Außenlamellenträger 62 sind Abschnitte 200 und 202 einer lamellenträgerseitigen Verzahnung zu erkennen, zwischen die zugeordnete Verzahnungsabschnitte 204 der Außenlamellen 206 mit einem gewissen Spiel in Umfangsrichtung eingreifen. In Fig. 4 sind zwischen den Außenlamellen 206 Innenlamellen 208 mit Nuten aufweisenden Reibbelägen 210 zu erkennen. Ferner ist in Fig. 4 der lamellenseitige Haltering 172 von zwei das Koppel- oder Trägerblech 60 am Außenlamellenträger 62 fixierenden Halteringe 172, 174 sowie ein Verzahnungsabschnitt 212 dieses Blechteils 60 zu erkennen.

Die in Fig. 4 erkennbaren Verzahnungsabschnitte 204 der Außenlamellen sind jeweils mit einem nach radial außen offenen, sich in axialer Richtung erstreckenden Schlitz 220 ausgeführt, in die eine Koppel- und Trennfeder 222 eingelegt ist. Die Koppel- und Trennfeder 222 ist derart gebogen, dass sie V- bzw. U-förmige Abschnitte 224 aufweist, die zwischen Verzahnungsabschnitten 204 benachbarter Lamellen derart eingreifen, dass ein jeweiliger Schenkel 226 des V- bzw. U-Abschnitts an den Verzahnungsabschnitten 204 anliegt und diese, jedenfalls im eingekuppelten Zustand der Lamellen-Kupplungsanordnung, in zu einander entgegengesetzte axiale Richtungen, also im Sinne eines Auseinanderdrückens der betreffenden Außenlamellen, vorspannt. Das Einkuppeln der Lamellen-Kupplungsanordnung mittels des hydraulischen Nehmerzylinders 118 und des Kolbens 110 erfolgt also gegen die Wirkung der Feder 222, die insoweit Rückstellfederfunktion aufweist.

Die V- bzw. U-Abschnitte sind durch sich im Wesentlichen in axialer Richtung erstreckende Federabschnitte 228 miteinander verbunden, und die Feder weist an ihren beiden axialen Enden jeweils einen entsprechenden, sich im Wesentlichen in axialer Richtung erstreckenden Endabschnitt 230 auf. Die Feder- und Endabschnitte 228, 230 greifen in die Schlitze 220 in den Verzahnungsabschnitten 204 der Außenlamellen ein. Längs der Feder aufeinander folgende Feder- und Endabschnitte 228 und 230 (im Folgenden werden beide Abschnitte auch undifferenziert gemeinsam als Federabschnitte bezeichnet) sind abwechslend gegeneinander in Umfangsrichtung versetzt, wie aus Fig. 4 erkennbar ist, wobei der Versatz derart ist, dass für unmittelbar benachbarte Außenlamellen 206 die Federabschnitte 228, 230 abwechselnd an in Umfangsrichtung zueinander entgegengesetzten Schlitzbegrenzungsflächen der Verzahnungsabschnitte 204 anliegen, wenn die Außenlamellen 206 Drehpositionen zueinander einnehmen, in denen die Verzahnungsabschnitte 204 und die Schlitze 220 in axialer Richtung fluchten. Durch den Eingriff der Feder 222 in die Schlitze 220 verbleibt den Außenlamellen nur noch ein geringes, durch die Breite der Schlitze in Umfangsrichtung gegebenes Drehspiel relativ zueinander, gewünschtenfalls gegen einen dämpfenden, reibschlüssigen Eingriff zwischen den Federschenkeln 226 und den Lamellenverzahnungsabschnitten 204. Dieses Drehspiel der Außenlamellen zu einander ist vorzugsweise deutlich kleiner als ein Drehspiel der durch die Feder 222 miteinander verkoppelten Lamellen gemeinsam relativ zum Außenlamellenträger.

Durch den Einbau wenigstens einer, vorzugweise mehrerer Koppel- und Trennfedern 222 auf die anhand von Fig. 4 erläuterte Art und Weise wird eine gezielte Trennung der Außenlamellen bei offener Lamellenkupplung bzw. beim Öffnen der Lamellenkupplung 64 erreicht. Wenigstens eine, vorzugsweise mehrere entsprechende Koppel- und Trennfedern können auch für die radial innere Lamellenkupplung 72 vorgesehen sein und in gleicher Art und Weise in Verzahnungsschlitze bzw. axial zwischen Verzahnungen der Außenlamellen eingesetzt sein. Aufgrund der Trennung der Außenlamellen (hier belaglose Stahllamellen) wird der verfügbare Hub des Betätigungskolbens 110 bzw. 130 ausgenutzt und es werden Schleppmomente im Wesentlichen vermieden. Gemäß einer bevorzugten Ausführungsform sind für die Innenlamellen, hier Belaglamellen, keine derartigen Koppel- und Trennfedern vorgesehen, sondern die Innenlamellen können sich im ausgekuppelten Kupplungszustand axial unkontrolliert zwischen einem jeweiligen Außenlamellenpaar bewegen. Da der vorgesehene Lüftweg für zwei Reibflächenpaarungen aufgrund der Trennung der Außenlamellen durch die Federelemente 222 gewährleistet ist, treten im Betrieb im ausgekuppelten Zustand nur noch sehr geringe Schleppmomente aufgrund gegenseitigem Eingriff zwischen Außen- und Innenlamellen auf, insbesondere da das Auseinanderdrücken der Außenlamellen die Trennung der Reibflächen der Außenlamellen von den Reibflächen der Innenlamellen unterstützt. Die aktive Trennung der Außenlamellen durch die erläuterte, in den Figuren gezeigte Federanordnung verhindert auch weitgehend ein Aneinanderkleben der Außen- und Innenlamellen nach einem längeren Stillstand.

Die Trennung der Außenlamellen von den Innenlamellen kann auch durch eine entsprechende Kühlölführung noch zusätzlich unterstützt werden, so dass das Vorsehen einer Federanordnung zur gezielten Trennung der Innenlamellen von den Außenlamellen bzw. zum Auseinanderdrücken der Innenlamellen verzichtbar erscheint. Es ist aber ohne Weiteres möglich, dass den Koppel- und Trennfedern 222 entsprechende Federelemente auch für die Innenlamellen der Lamellenkupplungen vorgesehen sind und in entsprechender Weise in Verzahnungsschlitze bzw. zwischen Verzahnungen der Innenlamellen eingesetzt sind.

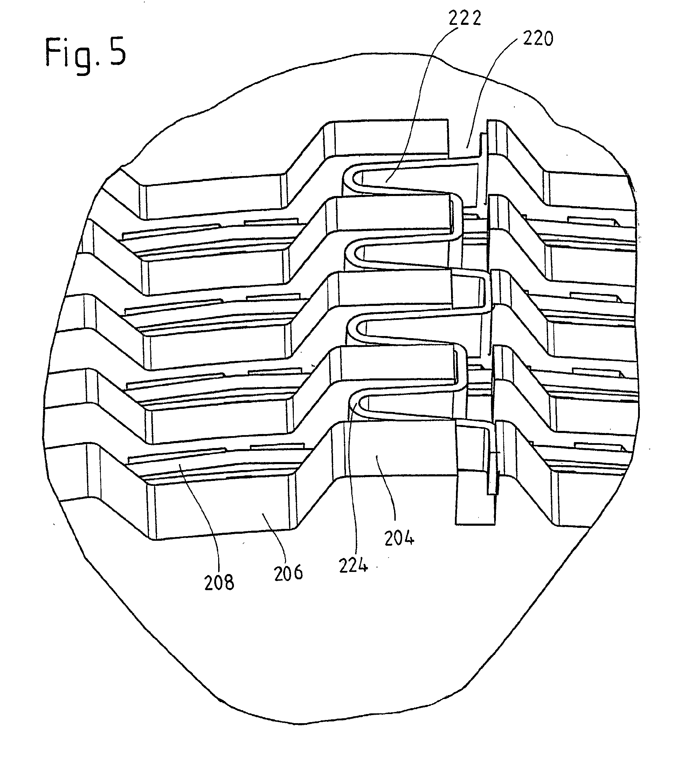

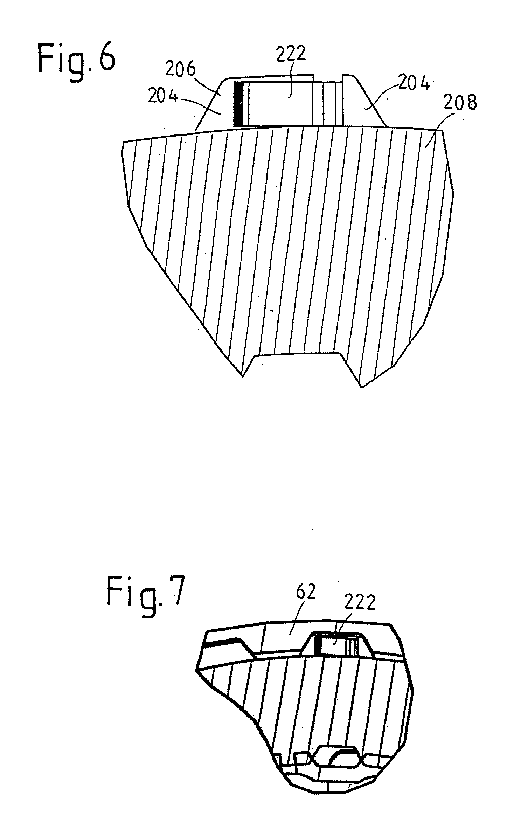

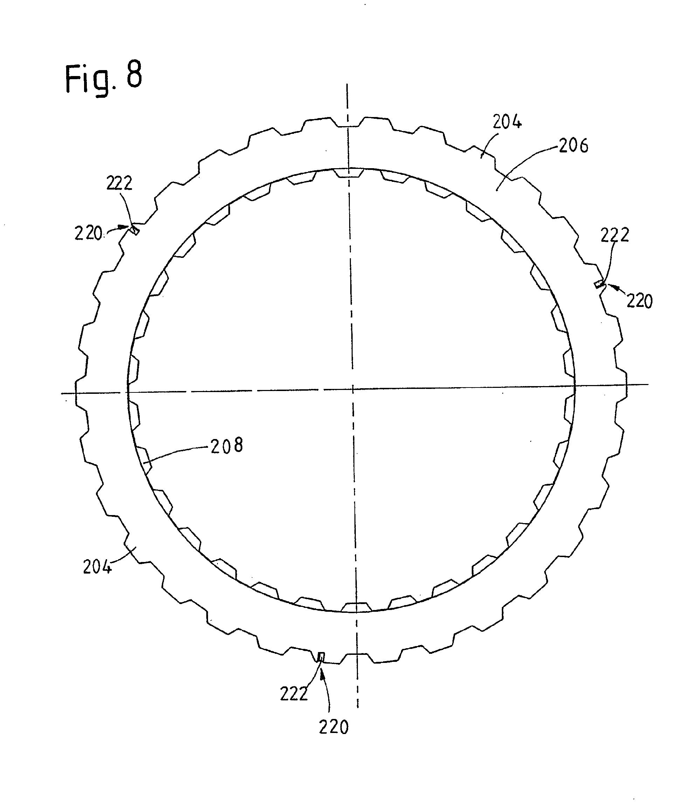

Weitere Ansichten des Lamellenpakets 206, 208 und der Feder 222 sind in den Fig. 5, 6 und 7 sowie in der Fig. 8 gezeigt. Wie in diesen Figuren zu erkennen, erstreckt sich die jeweilige Koppel- und Trennfeder (nach Fig. 8 sind insgesamt drei Koppel- und Trennfedern 222 vorgesehen) nicht über die äußere Radialabmessung der Verzahnungsabschnitte 204 der Außenlamellen 206 hinaus, so dass das Lamellenpaket samt den in die Schlitze 220 eingelegten Federn 222 axial zwischen dem Außenlamellenträger und dem Innenlamellenträger eingeschoben werden kann unter Herstellung des Drehmitnahmeeingriffs zwischen den Außenlamellen und dem Außenlamellenträger sowie zwischen den Innenlamellen und dem Innenlamellenträger. Wie in Fig. 8 zu erkennen, sind die drei Koppel- und Trennfedern 222 um den Umfang des Lamellenpakets gleichmäßig verteilt angeordnet, so dass ein Verkippen der Lamellen und damit ein Klemmen in der Verzahnung vermieden wird. Es können auch mehr oder weniger Federn eingebaut werden, die vorzugweise aber ebenfalls gleichmäßig um den Umfang des Lamellenpakets verteilt werden sollten.

Ein wichtiger Aspekt der Koppel- und Trennfedern 222 ist nicht nur das Auseinanderdrücken der Außenlamellen (bzw. der Innenlamellen), sondern auch die Verkopplung der betreffenden Lamellen in Umfangsrichtung. Die Federelemente 222 stützen sich, wie oben erläutert, wechselweise von Lamelle zu Lamelle an der in Umfangsrichtung vorderen und hinteren Schlitzkante ab, so dass die Drehmassen der Einzellamellen elastisch zusammengekoppelt bzw. zusammmengeschaltet werden. Im Rahmen der Elastizität der Federn 222 und des durch die Schlitzbreite in Umfangsrichtung gegebenen Spiels sind die betreffenden Lamellen zur gemeinsamen Drehung im Rahmen des Drehspiels gegenüber dem Lamellenträger verbunden, so dass in erster Näherung für die Anregung von Drehschwingungen eine Drehmasse bzw. Trägheitsmasse maßgeblich ist, die der Summe der Einzelmassen der Lamellen entspricht mit einer entsprechend tieferen Resonanzfrequenz. Dies ist ein wichtiger Vorteil im Hinblick auf eine störende Anregung von Bewegungen der Lamellen innerhalb des Verzahnungsspiels, insbesondere die Anregung von Drehschwingungen, wobei es ohne die erfindungsgemäße Verkopplung zu einem starken Schlagen der Lamellen in den Verzahnungen kommen kann, insbesondere im Leerlaufbetrieb. Durch die erfindungsgemäße Drehverkopplung der Lamellen kann die Anregung der genannten Relativbewegungen der Lamellen zum Lamellenträger in hohem Maße reduziert werden. Zur Reduzierung bzw. sogar Vermeidung dieser Relativbewegungen und eines hieraus resultierenden Schlagens in der Verzahnung trägt auch nicht unwesentlich bei, dass die Lamellen aufgrund der Elastizität der Federn 222 und des Drehspiels relativ zueinander aufgrund der Schlitzbreite selbst relativ zueinander schwingen können, so dass auf Motorungleichförmigkeiten zurückzuführende Anregungsenergien von diesem schwingungsfähigen System aufgenommen werden können und damit nicht mehr zur Anregung von Drehbewegungen der Lamellen gemeinsam relativ zum Lamellenträger zur Verfügung stehen. Durch Vorsehen eines Reibeingriffs zwischen den Federschenkeln 226 und den benachbarten Verzahnungsabschnitten der Lamellen auch im ausgekuppelten Zustand können diese "inneren" Drehbewegungen der Lamellen gedämpft werden, so dass ein Tilgungseffekt erzielt wird.

Generell ist zu sagen, dass durch Einstellung der Elastizität der Federn, des durch die Schlitzbreiten gegebenen Drehspiels und des Reibeingriffs zwischen den Federschenkeln und den Verzahnungsabschnitten die Schwingungssysteme Lamelle-Lamelle und Lamellen-Lamellenträger verstellbar sind, so dass Tilgereffekte optimierbar und Phasenverschiebungen (oder Verstimmungen des Systems) bzgl. der Motoranregung einstellbar sind.

Aus den vorstehenden Ausführungen betreffend die Drehverkopplung der Lamellen wird deutlich, warum im Falle der Konstruktion der Fig. 1 speziell die Außenlamellen durch die Federelemente 222 verkoppelt sind, nämlich da diese eingangsseitig angeordnet sind, sich also auch im Leerlauf und bei ausgekuppelten Lamellenkupplungen 64 und 72 stets mit der Motorabtriebswelle mitdrehen. Im ausgekuppelten Zustand drehen sich die Innenlamellen samt ihren Innenlamellenträgern höchstens nur noch unter Einwirkung von Schleppmomenten, so dass das Schlagen von Innenlamellen in den Verzahnungen in größerem Ausmaß nicht auftreten kann. Es empfiehlt sich generell, eine erfindungsgemäße Verkoppelung von eingangsseitigen Lamellen alleine oder wenigstens für eingangsseitige Lamellen vorzusehen. Es mag durchaus aber auch Situationen geben, in denen eine erfindungsgemäße Verkoppelung von ausgangsseitigen Lamellen, zusätzlich oder alternativ zu einer erfindungsgemäßen Verkoppelung der eingangsseitigen Lamellen, vorteilhaft ist.

Betreffend die Dämpfung von angeregten Drehbewegungen der Lamellen relativ zueinander bzw. relativ zum Lamellenträger ist noch zu ergänzen, dass man auch zusätzlich einen mittelbaren oder unmittelbaren Reibeingriff zwischen den Federelementen oder/und den Lamellen einerseits und dem zugeordneten Lamellenträger andererseits vorsehen kann. Beispielsweise könnten die Federn 222 axial nach außen gebogene Abschnitte aufweisen, die am Innenumfang des Außenlamellenträgers (bzw. am Außenumfang des Innenlamellenträgers) reibend schleifen. Eine andere Möglichkeit ist, die Federn axial zu verlängern, so dass ein Endabschnitt der jeweiligen Feder an einer Fläche des Lamellenträgers bzw. eines daran festgelegten Halterings (etwa des Halterings 172) reibend anliegt.

## Patentansprüche

1. Kupplungseinrichtung (12) für die Anordnung in einem Kraftfahrzeug-Antriebsstrang (10) zwischen einer Antriebseinheit und einem Getriebe, umfassend wenigstens eine einer Getriebeeingangswelle (22 bzw. 24) zugeordnete Lamellen-Kupplungsanordnung (64 bzw. 72) zur Momentenübertragung zwischen der Antriebseinheit und dem Getriebe, wobei die Kupplungsanordnung einen Außenlamellenträger (62 bzw. 70) mit Außenlamellen und einen Innenlamellenträger (82 bzw. 86) mit Innenlamellen aufweist, von denen einer (62 bzw. 70) samt seinen Lamellen (206) einer der Antriebseinheit zugeordneten Eingangsseite und der andere (82 bzw. 86) samt seinen Lamellen (208) einer der Getriebeeingangswelle zugeordneten Ausgangsseite der Kupplungsanordnung zugehört,
**dadurch gekennzeichnet,**
**dass** zumindest einige der der Eingangsseite zugehörigen Lamellen (206) unabhängig vom Lamellenträger durch eine Koppelanordnung (222) im Sinne einer Verkoppelung ihrer Drehmassen starr oder-vorzugsweise - elastisch miteinander gekoppelt sind oder/und dass zumindest einige der der Ausgangsseite zugehörigen Lamellen unabhängig vom Lamellenträger durch eine Koppelanordnung im Sinne einer Verkoppelung ihrer Drehmassen starr oder - vorzugsweise-elastisch miteinander gekoppelt sind.

2. Kupplungseinrichtung nach Anspruch 2, **dadurch gekennzeichnet, dass** die Kupplungseinrichtung (12) als Doppel- oder Mehrfach-Kupplungseinrichtung ausgebildet ist und wenigstens zwei einer jeweiligen Getriebeeingangwelle (22 bzw. 24) zugeordnete Lamellen-Kupplungsanordnungen (64, 72) aufweist, wobei für wenigstens eine (64), vorzugsweise für jede der Kupplungsanordnungen zumindest einige der der jeweiligen Eingangsseite zugehörigen Lamellen (206) unabhängig vom betreffenden Lamellenträger durch eine Koppelanordnung (222) im Sinne einer Verkoppelung ihrer Drehmassen starr oder - vorzugsweise - elastisch miteinander gekoppelt sind oder/und zumindest einige der der jeweiligen Ausgangsseite zugehörigen Lamellen unabhängig vom betreffenden Lamellenträger durch eine Koppelanordnung im Sinne einer Verkoppelung ihrer Drehmassen starr oder - vorzugsweise - elastisch miteinander gekoppelt sind.

3. Kupplungseinrichtung nach Anspruch 1 oder 2, **dadurch gekennzeichnet, dass** die Koppelanordnung wenigstens ein Federelement (222) umfasst, welches die betreffenden Lamellen (206) elastisch in Richtung auf eine vorgegebene Relativdrehstellung vorspannt.

4. Kupplungseinrichtung nach einem der Ansprüche 1 bis 3, **gekennzeichnet durch** wenigstens eine eingangsseitigen Lamellen (206) oder/und ausgangsseitigen Lamellen zugeordnete, wenigstens ein Federelement umfassende Federanordnung (222), die eine Trennung von im gegenseitigen Reibeingriff stehenden Lamellen beim Auskuppeln zumindest unterstützt.

5. Kupplungseinrichtung nach Anspruch 3 und 4, **dadurch gekennzeichnet, dass** die Federanordnung (222) die Koppelanordnung bildet.

6. Kupplungseinrichtung nach einem der Ansprüche 1 bis 5, **dadurch gekennzeichnet, dass** die Außenlamellen (206) zugeordnete Koppelanordnung bzw. Federanordnung (222) eine Mehrzahl von um einen Außenumfang des von den Innen- und Außenlamellen gebildeten Lamellenpakets (206, 208) verteilten, zwischen dem Außenumgang und einem Innenumfangsbereich des Außenlamellenträgers (62) angeordneten Federelementen (222) aufweist, die an den Außenlamellen (206) im Sinne der Verkoppelung ihrer Drehmassen oder/und im Sinne eines Auseinanderdrückens in axialer Richtung angreifen.

7. Kupplungseinrichtung nach einem der Ansprüche 1 bis 6, **dadurch gekennzeichnet, dass** die Innenlamellen zugeordnete Koppelanordnung bzw. Federanordnung eine Mehrzahl von um einen Innenumfang des von den Innen- und Außenlamellen gebildeten Lamellenpakets verteilten, zwischen dem Innenumgang und einem Außenumfangsbereich des Innenlamellenträgers angeordneten Federelementen aufweist, die an den Innenlamellen im Sinne der Verkoppelung ihrer Drehmassen oder/und im Sinne eines Auseinanderdrückens in axialer Richtung angreifen.

8. Kupplungseinrichtung nach Anspruch 6 oder 7, **dadurch gekennzeichnet, dass** wenigstens drei Federelement (222) in etwa gleichen Winkelabständen um den Umfang des Lamellenpakets (206, 208) verteilt sind.

9. Kupplungseinrichtung nach einem der Ansprüche 6 bis 8, **dadurch gekennzeichnet, dass** die betreffenden Lamellen (206) mit Schlitzen (220) in ihren Verzahnungsbereichen (204) ausgeführt sind, in die die Federelemente (222) eingreifen, um die Federelemente in bezug auf die Lamellen zu positionieren oder/und die betreffenden Lamellen (206) federelastisch in Umfangsrichtung miteinander zu koppeln.

10. Kupplungseinrichtung nach einem der Ansprüche 6 bis 9, **dadurch gekennzeichnet, dass** die Federelemente (222) mit elastisch in axialer Richtung gegeneinander verstellbaren Abschnitten (226) zwischen Verzahnungsbereichen (204) benachbarter Lamellen (206) eingreifen, um die Lamellen paarweise in zueinander entgegengesetzte Axialrichtungen elastisch vorzuspannen.

11. Kupplungseinrichtung nach Anspruch 10, **dadurch gekennzeichnet, dass** die in axialer Richtung gegeneinander verstellbare Abschnitte von Federschenkeln (226) eines jeweiligen, zwischen die Verzahnungsbereiche (204) eingreifenden U- oder V-Abschnitts (224) des jeweiligen Federelements (222) gebildet sind.

12. Kupplungseinrichtung nach einem der Ansprüche 1 bis 11, **dadurch gekennzeichnet, dass** zumindest einigen der der Eingangsseite zugehörigen Lamellen (206) oder/und zumindest einigen der der Ausgangsseite zugehörigen Lamellen eine Dämpfunganordnung (222) zugeordnet ist, die Drehschwingungen der Lamellen relativ zum zugeordneten Lamellenträger oder/und Drehschwingungen der Lamellen relativ zueinander durch Reibung dämpft.

13. Kupplungseinrichtung nach Anspruch 12, **dadurch gekennzeichnet, dass** die Koppelanordnung bzw. Federanordnung (222) die Dämpfungsanordnung bildet.

14. Kupplungseinrichtung nach Anspruch 13, **dadurch gekennzeichnet, dass** wenigstens ein Federelement (222) der Koppelanordnung bzw. Federanordnung mit einem Dämpfungsbereich (226) an wenigstens einer Lamelle (206) oder/und an dem den betreffenden Lamellen zugeordneten Lamellenträger reibschlüssig anliegt.

15. Kupplungseinrichtung nach Anspruch 11 und 14, **dadurch gekennzeichnet, dass** die Federschenkel (226) als Dämpfungsbereich zur Dämpfung von Drehschwingungen der Lamellen (206) relativ zueinander dienen.
